Europäisches Patentamt

European Patent Office    (11) Publication number: **0 072 256**

Office européen des brevets    **A2**

(19)

(12)

# EUROPEAN PATENT APPLICATION

(21) Application number: **82304246.0**    (51) Int. Cl.³: **B 29 D 3/02**
    // A63B49/10, A63B53/00,
(22) Date of filing: **11.08.82**    A63B59/12

(30) Priority: **12.08.81 GB 8124691**

(43) Date of publication of application: **16.02.83**
    **Bulletin 83/7**

(84) Designated Contracting States: **AT BE CH DE FR IT LI NL SE**

(71) Applicant: **COMPAGNIE FRANCAISE DES ISOLANTS, B.P. 16 1, Rue du Bois de Tillet, F-60800 Crepy-en-Valois (FR)**

(72) Inventor: **Ferrand, Jean, 1 Rue Hector Berlioz Apartment No. 154, F-60800 Crepy-en-Valois (FR)**
    Inventor: **Monget, Pierre, 2 Rue Mare Gondreville, F-60117 Vaumoise (FR)**

(74) Representative: **Jones, David Colin et al, RAYCHEM LIMITED Morley House 26 Holborn Viaduct, London E.C.1. (GB)**

(54) Reinforced fabric.

(57) A fabric tube (2) is reinforced in a non-uniform manner by one or more elongate members (6) extending longitudinally within the material of the fabric. In a preferred embodiment elongate carbon fibre tows extend within a glass fibre fabric. The reinforced tube may be used where non-uniform reinforcement is desirable in order to achieve a low strenght/weight ratio – for example in tennis recquets.

FC209

## DESCRIPTION

0072256

### REINFORCED FABRIC

This invention relates to reinforced fabrics and in particular to fabrics suitable for use in articles that are reinforced in a non-uniform manner.

In some articles a higher strength is required in certain parts and/or in certain directions. For example, a tennis racquet head experiences a greater stress in the direction of impact of the ball, that is to say generally perpendicularly to the racquet face, than in a direction parallel to the racquet face. Reinforcement of only parts of the article can therefore produce the required strength while maintaining the weight and cost as low as possible. Further examples are sports equipment such as squash and badminton racquets, golf clubs, hockey sticks and skis, all of which need to be capable of withstanding high stresses, particularly in certain directions, and yet be light and easy to use. A high strength/weight ratio is also advantageous in articles such as torsion bars, drive shafts and leaf springs e.g. for automotive applications. Such articles may be manufactured from well-known high strength, low weight materials such as carbon fibre or glass fibre held in a resin matrix. For example, the articles may be reinforced entirely with these high strength materials or may be laminated with lower strength materials such as wood to give non-uniform reinforcement.

In accordance with a first aspect of the present invention there is provided a reinforced fabric tube having at least one elongate member extending substantially longitudinally and within the fabric of the tube so as to provide non-uniform reinforcement of the fabric circumferentially of the tube, and wherein said at least one elongate member and/or the material forming said fabric has an elastic modulus of at least 50 giga Pascals and/or has a tensile strength of at least 2 giga Pascals.

The invention thus provides a tube that is non-uniformly reinforced such that at least one part of the circumference is more resilient to deflection under applied force than is the remainder of the circumference of the tube.

The or each elongate member extends within the fabric of the tube so as to be intertwined therewith to provide a unitary fabric layer.

The elongate member or members, in extending "substantially longitudinally" of the fabric tube need not extend linearly, provided that the reinforcement provided is generally in the same circumferential region along the length of the tube.

It will be appreciated that "tube" includes a flattened tube, that is to say the construction of fabric may be in the form of, or capable of being put into the form of, a hollow elongate body, which may or may not be of circular cross-section.

Preferably the reinforced tube comprises a plurality of the elongate members.  The or each elongate member is preferably fibrous, and may comprise a single filament, for example of boron or silicon carbide, or a plurality of filaments, for example a carbon filament tow of from about 3,000 to 12,000, or even up to 160,000 individual filaments, or a mixture of filaments, for example a mixture of boron and silicon carbide.

Preferably the fabric is formed as a braid, but it may also be a weave or knit.

The non-uniform reinforcement may be provided in several ways. For example, where the reinforced tube comprises a plurality of elongate members, the non-uniformity may be provided by having at least one of the members of a different type from the others. The members may be of a different type from each other by being chemically different, by comprising a different number of tows, by being of different diameter, or by having different mechanical properties. Alternatively, or in addition, the non-uniformity may be provided by distributing the elongate members such that the concentration thereof is non-uniform circumferentially of the tube. For example, the elongate members may be distributed such that two circumferentially opposed portions of the tube have a higher concentration of elongate members than the remaining portions. The higher concentration may be achieved, for example, by arranging the elongate members such that they are contained only in the two circumferentially opposed portions of the tube, or only in the two circumferentially opposed portions and one of the remaing portions. The elongate members in each of the circumferentially opposed portions may be of the same material. This material may be different from that of any elongate members that are in one or both of the remaining portions.

In a preferred form of the present invention, the material of the fabric and of the or each elongate member has an elastic modulus of at least 50 giga Pascals and a tensile strength of at least 2 giga Pascals. Particularly suitable materials, used separately or in combination, are glass fibre, carbon fibre, boron fibre, an aromatic polyamide fibre (e.g. as sold under the Trade Names Nomex and Kevlar), PBI, silicon carbide, aluminium oxide, metal filament, or wire. In the case where one or more of the reinforcing members comprises a carbon filament tow, for example, it may comprise up to 3,000 or even 12,000 individual filaments, and tows comprising up to 160,000 individual filaments are available commercially.

Additional reinforcement may be provided by incorporating one or more elongate members in the fabric, wound in a spiral manner. Such reinforcement may be useful in providing preferential torsion characteristics of the tube in one direction.

Subsequent to formation of the fabric tube with one or more elongate members therein, the tube may be embedded or impregnated in a matrix to provide a rigid composite article.

The matrix may be formed from elastomer, thermosetting material, concrete, resin, metal, alloy, thermoplastic, ceramic or glass, depending on the required finished article.

In accordance with a second aspect of the invention there is provided a reinforced article, which may be, for example, a profile, or a tennis racquet frame, the article comprising at least one unitary fabric layer arranged to provide non-uniform reinforcement of the article.

The unitary fabric layer is advantageously a reinforced tube in accordance with the first aspect of the invention.

The unitary construction of the layer avoids having to combine, for example overlap, a plurality of layers, thus simplifying manufacture of the article.

By an article being a "profile" is meant an elongate article that is of substantially constant cross-section or of cross-section that varies slowly therealong. The profile may be solid or hollow, and may be, but is not necessarily, of circular cross-section. Examples of profiles are beams of I, H or T cross-section.

Embodiments of a reinforced fabric tube and reinforced articles, each in accordance with the present invention, will now be described, by way of example, with reference to the accompanying schematic drawings, in which:

Figure 1      is a perspective view of a first embodiment of the fabric tube;

Figure 2      is a cross-section through the tube of Figure 1;

Figure 3      shows schematically a tennis racquet employing the fabric tube of Figures 1 and 2;

Figure 4      is an enlarged view of a portion IV-IV of the frame of the racquet of Figure 3;

Figure 5      shows the frame portion of Figure 4 including additional reinforcing fibres;

Figure 6      is a perspective view of another embodiment of the article;

Figure 7      is a cross-section of a second embodiment of fabric tube;   and

Figures 8 and 9 are perspective views of a third and fourth embodiment of fabric tube, respectively.

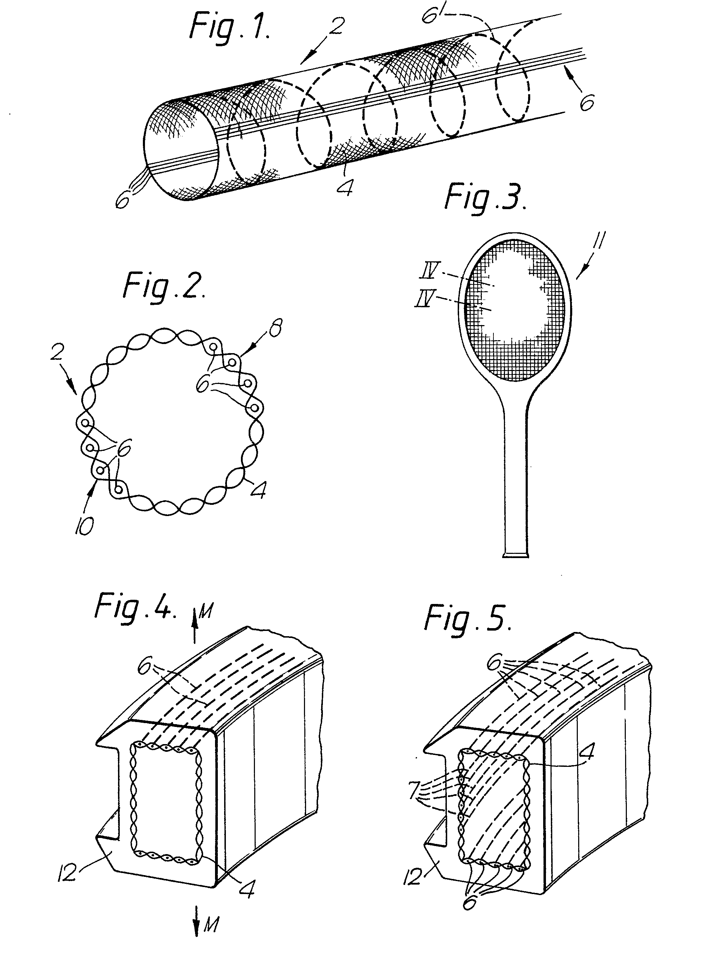

Referring to Figures 1 to 3, a fabric tube 2 comprises a braid 4 formed from a mixture of glass fibre and carbon fibre, and has elongate yarns 6 of carbon fibre running generally along the length of the tube 2. The yarns 6 are intertwined between the strands of the braid 4 so as to be retained within the material of the fabric of the tube 2. The elastic modulus of the material of the braid and of the yarns is in excess of 50 giga Pascals, and the tensile strength in excess of 2 giga Pascals.

Referring to Figure 2 it can be seen that the yarns 6 are distributed such that their concentration is non-uniform circumferentially of the tube 2, the yarns 6 occupying only two circumferentially opposed portions 8 and 10 of the tube 2. The yarns 6 thus impart preferential reinforcement to the two portions 8 and 10 of the tube 2 and non-uniform reinforcement of the tube 2 as a whole.

As shown in dotted outline in Figure 1, a further elongate member 6' may be provided spirally wound through the fabric of the tube 2. The member 6', of carbon fibre, provides further reinforcement, in a torsional sense, such that the tube 2 when reinforced in this way resists torque preferentially in one direction of rotation as opposed to the other.

The reinforcement provided by the yarns 6 need not be symmetrical with respect to the tube 2.

In Figures 3 and 4, the fabric tube 2 is shown forming part of the frame of a tennis racquet 11, and is impregnated with a resin matrix 12 to provide the required rigidity. The directions of maximum stress in the racquet head are indicated as M corresponding to the general direction of impact of the ball, perpendicular to the racquet face. The tube is oriented so that the reinforcing yarns 6 extend along the two opposing major faces of the racquet head so that they give preferential reinforcement of the

racquet in the directions M.    It will be appreciated that the non-uniform reinforcement provided means that additional strength over that of the braid by itself is provided to withstand the stress applied, while the weight of the racquet is minimised.   Furthermore, since the required strength is achieved with the minimum amount of expensive materials, such as the carbon fibre, the cost of production is minimised.

The racquet head frame is hollow and may be manufactured by any convenient technique, for example by inserting a thin walled Rilsan (Trade Mark) tubular liner inside the reinforced braid, placing the article in a mould corresponding to the desired shape of the racquet head and inflating the liner to press the reinforced braid against the mould walls;   the braid may then be stiffened and held in this desired shape by introducing resin  through the walls of the mould so that the braid is impregnated and hence retains its shape. This method is generally disclosed in, for example, UK Patent Specification No. 1312543.   The liner may subsequently be removed from the fabric tube after the resin has set. It will be appreciated that such a hollow structure is advantageously low in weight compared to previously used solid reinforced structures, for example, laminates of carbon fibre on relatively heavier wooden cores.

Figure 5 shows the portion of the racquet frame 11 of Figure 4 further reinforced by yarns of boron fibre 7. The boron fibres 7 extend around only the outside edge of the tennis racquet frame 11, and may be incorporated in the racquet frame in this way to help maintain the shape of the frame against any stresses acting in the plane of the racquet face.

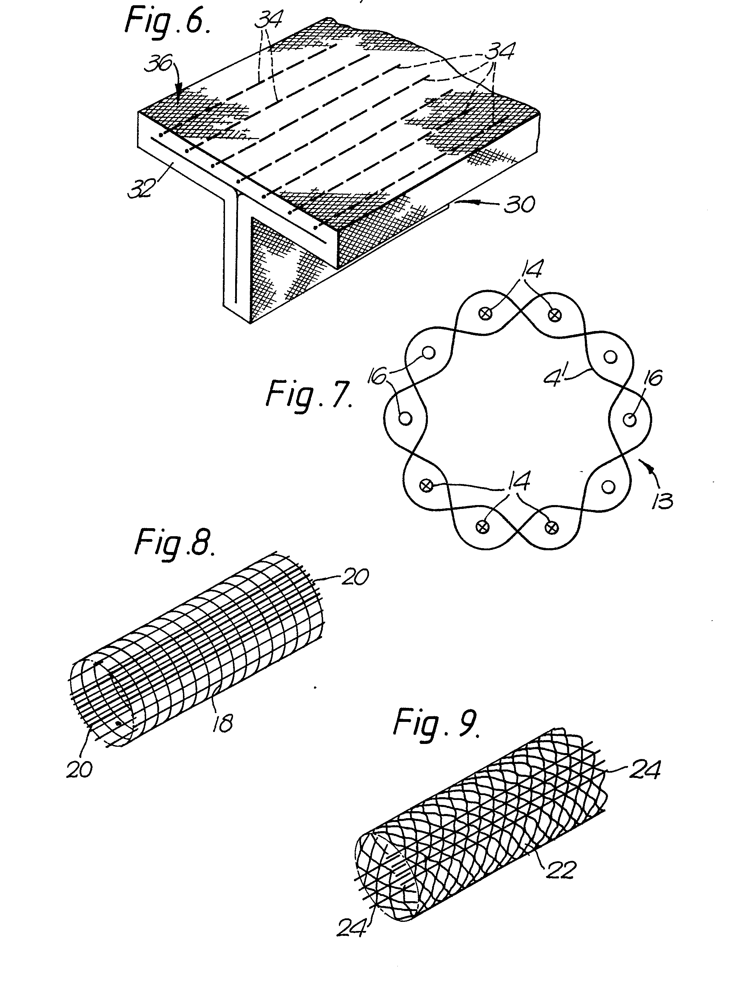

Figure 6 shows another article provided with non-uniform reinforcement.   The article 30 is a profile of "T"-section, and is formed from a carbon fibre braided tube 32 that after manufacture and subsequent flattening has been embedded in a resin matrix to provide a rigid composite article of T-shape. During the braiding operation, carbon fibres 34 were introduced into the braided carbon fibres along one circumferential portion only of the resulting tube, this portion being selected such that on forming the T-shape, the additional, reinforcing fibres, are aligned along one major surface 36 of the T-shape.   The profile 30 may be used as a support strut or girder, for example in an aircraft or a space vehicle.

Figure 7 shows a braided tube 13 in which reinforcing yarns are distributed such that the concentration of yarns is uniform circumferentially of the braid.  However, the yarns 14 which are located in circumferentially opposed portions of the tube 2 are of different material from yarns 16 in the remaining portions of the braid. Because the yarns 14 and 16 have different strength characteristics this arrangement  provides the tube 13 with non-uniform reinforcement. Carbon fibre and glass fibre, for example, could be used for yarns 14 and 16 respectively, to reinforce a braid 4 of glass fibre. Although the fabric tubes so far discussed have been referred to as comprising a braid, it is also envisaged that a weave or knit  might be used.   Figure 8 shows a tube comprising a weave 18 reinforced by elongate yarns 20, and Figure 9 shows a tube comprising a knit 22 reinforced by elongate yarns 24.

In an alternative arrangement (not shown) employing a knitted tube, it is envisaged that one or more rows of the knit itself may comprise the reinforcing members, by being formed of a different type of material from that of the rest of the knit.   It will be appreciated that such a row or rows, whilst extending substantially longitudinally of the tube do not do so in a straight line.

0072256

The reinforced fabric tube may be manufactured on conventional machines and may be done so very conveniently compared with the manufacture of reinforced arrangements known hitherto. Furthermore, a very high strength to weight ratio may be achieved with composite articles employing the present invention.    The same strength may be achieved using the present unitary fabric tube in a composite article, comprising, for example, a glass fibre braid and reinforcing carbon filament tows in a matrix, at one sixth of the weight of a conventional composite reinforced structure known and used hitherto which comprises a plurality of coaxial tubes of carbon and glass fibre.

## CLAIMS

1.    A reinforced fabric tube (2)  having at least one elongate member (6) extending substantially longitudinally and within the fabric of the tube so as to provide non-uniform reinforcement of the fabric circumferentially of the tube, and wherein said at least one elongate member (6) and/or the material forming said fabric has an elastic modulus of at least 50 giga Pascals and/or has a tensile strength of at least 2 giga Pascals.

2.    A tube according to Claim 1, comprising a plurality of said elongate members (6).

3.    A tube according to Claim 2 wherein at least one of the members (6) is of a different type from the others thereby to provide said non-uniform reinforcement.

4.    A tube according to Claim 2 or 3, wherein the concentration of the members (6) is non-uniform circumferentially of the tube (2).

5.    A tube according to Claim 4, wherein two circumferentially opposed portions of the tube (2) have a higher concentration of said elongate members (6) than the remaining portions of the tube (2).

6. A tube according to any preceding Claim, comprising at least one further elongate member (6') that extends spirally within and along the fabric of the tube(2).

7. A tube according to any preceding Claim, wherein the material of the fabric and/or of said elongate member (6,7) comprises one or more of glass fibre, carbon fibre, boron fibre, an aromatic polyamide fibre, PBI, silicon carbide, aluminium oxide, metal filament, or wire.

8. A tube according to any preceding Claim wherein the fabric comprises a braid or a weave or a knit.

9. A tube according to any preceding Claim, wherein the reinforced fabric is embedded or impregnated in a matrix (12) that preferably comprises one or more of an elastomer, thermosetting material, concrete, resin, metal alloy, thermoplastic, ceramic and glass.

10. A reinforced article comprising at least one unitary fabric layer arranged to provide non-uniform reinforcement of the article, which fabric layer preferably comprises a tube according to any one of Claims 1 to 9.

Fig.1.

Fig.2.

Fig.3.

Fig.4.

Fig.5.

0072256

Fig.6.

34

36

34

32

30

Fig.7.

14

16

4'

16

14

13

Fig.8.

20

18

20

Fig.9.

24

22

24